Europäisches Patentamt

European Patent Office

Office européen des brevets

(19)

(11) Publication number: **0 030 112**
**B1**

(12)

# EUROPEAN PATENT SPECIFICATION

(45) Date of publication of patent specification: 04.07.84

(51) Int. Cl.³: **G 01 N 27/12**

(21) Application number: 80304211.8

(22) Date of filing: 24.11.80

(54) Combustible gas detectors.

(30) Priority: 24.11.79 JP 152329/79

(43) Date of publication of application:
10.06.81 Bulletin 81/23

(45) Publication of the grant of the patent:
04.07.84 Bulletin 84/27

(84) Designated Contracting States:
DE FR GB NL

(56) References cited:
DE - A - 2 651 160
DE - A - 2 809 873
DE - A - 2 821 266
US - A - 3 999 947
US - A - 4 001 757
US - A - 4 045 764

(73) Proprietor: Matsushita Electric Industrial Co., Ltd.
1006, Oaza Kadoma
Kadoma-shi Osaka-fu, 571 (JP)

(72) Inventor: Yoshihiko, Nakatani
158, Shinpoin-cho Tennoji-ku
Osaka-shi Osaka-fu (JP)
Inventor: Sakai, Masayuki
3-9-303, Myokenzaka
Katano-shi Osaka-fu (JP)
Inventor: Nakatani, Seiichi
24-1-502, Miiminami-machi
Neyagawa-shi Osaka-fu (JP)
Inventor: Matsuoka, Michio
A-601, 1-6, Sawaraginishi
Ibaraki-shi Osaka-fu (JP)

(74) Representative: Spencer, Graham Easdale et al,
A.A. Thornton & CO Northumberland House 303-306, High Holborn
London WC1V 7LE (GB)

Courier Press, Leamington Spa, England.

# Description

The present invention is concerned with combustible gas detectors.

Various metal oxide semiconductors have been proposed for use as gas detecting elements in combustible gas detectors, which semiconductors undergo a change in resistivity in the presence of a combustible (or reducing) gas, such as methane (which is the principal component of natural gas).

Previously proposed gas detecting elements for detecting methane suffer from poisoning by various gases and have low selectivity for methane.

Gas leak alarms are preferably such that the alarm is operated at a concentration somewhat lower than the lower explosion limit (LEL) concentration, such as about one-tenth of the LEL concentration. It is thus important that they do not have significantly lower sensitivity for some combustible gases likely to be encountered if they are to be used for general purpose detection of methane, propane and hydrogen, for example.

Combustible gas detecting elements are conventionally in the form of a sintered film or body of a amorphous metal oxide semiconductor; typical such elements are disclosed in DE—A—2821266 and DE—A—2809873.

Such elements are generally somewhat gas-selective (that is, they have a high sensitivity to some combustible gases but a relatively low sensitivity to other combustible gases). This is believed to be determined by the depth of donor or acceptor levels in the semiconductor or the amount of active adsorption sites on the surface thereof. Metal oxides are used as the semiconductor because the elements are used at high temperatures and they should be resistant to oxidation at such temperatures.

The conventional way of enhancing the sensitivity of metal oxide type semiconductor type gas detecting elements has been to add noble metal catalysts; this is, of course, disadvantageous in view of their cost.

We have now developed an improved combustible gas detecting element, which has reduced gas-selectivity and which does not require a noble metal catalyst.

According to the invention, there is provided a combustible gas detector, which comprises a combustible gas detecting element in the form of a sintered film or body arranged between counterelectrodes, the detecting element comprising an amorphous metal oxide semiconductor containing anionic radicals; which detector is characterised in that the anionic radicals present in the semiconductor comprise halide ions (such as fluoride and/or chloride ions) and sulphate and/or hydroxyl ions.

The metal in the metal oxide is preferably wholly or predominently iron; it may, however, contain up to 50 atom% of at least one of copper, zinc, tin and indium. It is not necessary for all of the element to be amorphous; it may contain a crystalline substance inactive to gas or a minor amount of active crystalline substance.

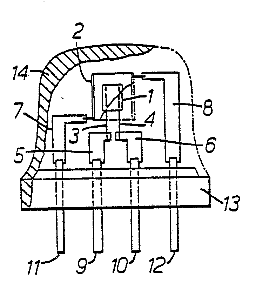

In order that the invention may be more fully understood, the following Examples are given by way of illustration only. In the Examples, reference will be made to the single figure of the accompanying drawings, which is a perspective view of a gas detector according to the invention.

## Example 1

Commercially available ferric chloride ($FeCl_3.6H_2O$, 30 g) and ferrous sulphate ($FeSO_4.7H_2O$, 60 g) were dissolved in one litre of water with stirring, the temperature being kept at 10°C. While the temperature was kept at 10°C, 8N ammonium hydroxide ($NH_4OH$) was added dropwise to the solution at a rate of 10 cc/min. until the pH of the solution reached 5. After the addition of ammonium hydroxide, the solution was kept at 10°C for 10 minutes and then the resulting coprecipitate was filtered off with suction. The resulting powder was dried in vacuum in a reduced pressure vessel, heat-treated in air at 400°C for 1 hour and crushed for 2 hours, and then formed into granules with an organic binder to obtain particles of size 100 to 200 micrometres. The resulting granules were used to form a combustible gas detector as shown in the accompanying drawing.

Two platinum electrode wires 3, 4 were embedded in the granules, and the powder was pressure-moulded to form a right circular cylinder 1 of diameter 2 mm, height 3 mm, followed by sintering in air at 550°C for 2 hours. The resulting porous cylinder 1 was provided with a coil-shape heater 2 wound around the cylinder 1; the heater 2 is arranged for the supply of electrical powder via heater pins 11 and 12 and heater frames 7 and 8. The resistance of the cylinder 1 is measured by means of pins 9 and 10 connected to platinum electrode wires 3 and 4 via frames 5 and 6. The heater pins 11, 12 and pins 9, 10 are fixed to a base 13, and an explosion-protecting stainless steel net 14 is fixed to the base 13.

The gas detecting element (that is, the sintered cylinder 1) did not have a particular line by X-ray diffraction, and also had a different Mössbauer pattern from that of $\alpha$-ferric oxide. This indicated that a larger amount of sulphate radicals or hydroxyl group or chlorine were remaining, and that the $\alpha$-$Fe_2O_3$ was not crystalline, but still amorphous.

The gas response characteristics of the gas detecting element were measured as follows: A measurement chamber with known volume was filled with air and the air was stirred slowly and continuously. The gas detectng element was connected to a socket on the inner wall of the chamber, and the temperature of the element was kept at 350°C by applying an electric current to the heater. Then, gas to be detected was injected into the measurement chamber by means of an injector, and the resistance change of the element was measured. (In the case of detection of a material which is liquid at ambient conditions, such as alcohol, the liquid material was vaporized by dripping onto a heated substrate).

The electric resistance ($R_o$) of the element at 350°C in air was $7.5 \times 10^6 \Omega$, while when the amount of the gas injected into the measurement chamber was 0.5 volume %, the electric resistance of the sensing body in the injected gas was $R_G$. The ratio $(R_o - R_G)/R_o$ for various gases is shown in Table 1.

TABLE 1

| Gas | $(R_o - R_G)/R_o$ (%) |
|---|---|
| methane | 26.5 |
| ethanol | 23.0 |
| hydrogen | 29.1 |
| isobutane | 29.4 |
| acetone | 29.7 |

Table 1 indicates that the $(R_o - R_G)/R_o$ values for various gases having the same concentrations are nearly the same. That is, each gas is adsorbed approximately equally.

An electrical current was then applied to the heater to keep the temperature of the detecting element at 350°C, the element being maintained at this temperature for 100 days in an atmosphere of ambient temperature 40°C and a relative humidity of 90%. The gas response characteristics were then examined as described above. The resistance in clean air was $6.6 \times 10^6 \Omega$, and the ratio of $R_o - R_G/R_o$ for various gases is shown in Table 2.

TABLE 2

| Gas | $\dfrac{R_o - R_G \ (\%)}{R_o}$ |
|---|---|
| methane | 25.4 |
| ethanol | 24.0 |
| hydrogen | 30.6 |
| isobutane | 30.2 |
| acetone | 29.0 |

By comparing Table 2 with Table 1, it is evident that deterioration of sensitivity is not significant even after prolonged use in an atmosphere of high temperature and high humidity; that is, the detecting element has stable life characteristics.

Comparison Example 1 (production of crystalline detecting element

(The starting materials used were the same as in the Example 1 above). To aqueous solutions of $FeCl_3$ and $FeSO_4$, at 80°C, was added, dropwise, an 8N solution of ammonium hydroxide at the rate of 10 cc/min., with stirring. Addition of the ammonium hydroxide was stopped when the solution pH reached 10.0; the temperature of the solution was then kept at 80°C for 10 minutes, and the resulting coprecipitate was filtered with suction and washed with water several times. The resulting powder was dried at 110°C, heat-treated in air for an hour at 400°C, crushed for two hours, and formed into granules of size 100 to 200 micrometres. The granules were used to form a combustible gas detector as described in Example 1.

The resulting sintered body had a peak corresponding to $\alpha$-$Fe_2O_3$ in X-ray diffraction pattern, and had a Mössbauer pattern indicative of crystalline $\alpha$-$Fe_2O_3$. Substantially no hydroxyl groups, sulphate radicals or chlorine was present as determined by chemical and infra-red analysis.

The gas response characteristics of the gas detecting element were measured as in Example 1, the results being shown in Table 3. At this time, resistance in air $R_o$ was $4.2 \times 10^6 \Omega$.

TABLE 3

| Gas | $(R_o - R_G)/R_o$ (%) |
|---|---|
| methane | 3.7 |
| ethanol | 15.5 |
| hydrogen | 18.0 |
| isobutane | 28.3 |
| acetone | 20.8 |

The results of Table 3 show that isobutane is efficiently adsorbed by the gas detecting element, but methane is not. Thus, the sensitivity to methane is much lower than in Example 1.

When the gas detecting element was kept at 350°C in a high humidity atmosphere (90% relative humidity) of ambient temperature 40°C, for about 20 days, the response characteristics became unstable, especially the low sensitivity to methane became much lower.

## Example 2

Aqueous solutions of commercially available tin sulphate $(Sn(SO_4)_2.2H_2O)$, indium sulphate $(In_2(SO_4)_3.9H_2O)$, copper sulphate $(CuSO_4.5H_2O)$ and zinc sulphate $(ZnSO_4.7H_2O)$, were made, and one or more of these aqueous solution was added to a mixed aqueous solution of $FeCl_3$ and $FeSO_4$ as described in Example 1. Solutions of $NH_4OH$ were dripped into each solution under the same conditions as in Example 1 to obtain a precipitate, and combusible gas détecting elements were produced by the same method as in Example 1.

The resulting sintered bodies were non-crystalline, as determined by X-ray diffraction, and the existence of sulphate radicals, hydroxyl groups and chlorine was found by chemical analysis and infra-red spectral analysis. Thus, the sintered bodies are thought to be composed mainly of amorphous semiconductor, but some crystalline material which cannot be detected by X-ray diffraction because it has too small particles or is present in too small amount may possibly be present.

The gas response characteristics for various detecting elements are shown in Table 4, as are the resistance $R_o$ in clean air, and $(R_o—R_G)/R_o$ for each gas of 0.5 volume % (where $R_G$ designates the resistance in the air containing a gas of 0.5 volume %). The measurements were carried out with the gas detecting element at 350°C.

Table 4 shows that the sensitivity $(R_o—R_G)/R_o$ to each gas, of an amorphous semiconductor based on the system of Fe-O-$(SO_4,OH,Cl)$ is increased by adding Sn, In, Cu or Zn, but if the amount of added substance becomes larger than the amount of iron, the sensitivity to methane is impaired, or the resistance decreases abnormally. At the same time, the sensitivity deteriorates for long-term operation.

### Comparison Example 2 (production of crystalline detecting elements)

Aqueous solutions of commercially available tin sulphate $(Sn(SO_4)_2.2H_2O)$, indium sulphate $(In_2(SO_4)_3.9H_2O)$, copper sulphate $(CuSO_4.5H_2O)$, and zinc sulphate $(ZnSO_4.7H_2O)$, were made, and one or more of these aqueous solutions was added to the mixed aqueous solution of $FeCl_3$ and $FeSO_4$ as described in Comparison Example 1. Solutions of $NH_4OH$ were dripped into each such solutions in the same way as in Comparison Example 1 to obtain a precipitate, and combustible gas detecting elements were made by the same method as in Example 1.

X-ray analysis of these detecting elements showed the presence of crystalline phases of $SnO_2$, $In_2O_3$, CuO or ZnO in accordance with the starting materials, while chemical analysis and infra-red spectral analysis showed the absence of sulphate radicals, hydroxyl groups and chlorine. The gas response characteristics when the elements were used at 350°C were similar to those of Comparison Example 1; in particular, the sensitivity to methane was low. Also, the deterioration of characteristics in high temperature and high humidity was large as for the case of Comparison Example 1; the deterioration of sensitivity to methane was especially conspicuous.

## Example 3

Commercially available ferrous sulphate $(FeSO_4.7H_2O)$ 60 g and ferric fluoride $(FeF_3.3H_2O)$ 30 g were each dissolved in one litre of water, and then they were mixed. One or more aqueous solutions of $(Sn(SO_4)_2.2H_2O$, $In_2(SO_4)_3.9H_2O$, $CuSO_4.5H_2O$ and $ZnSO_4.7H_2O$ were added and a solution of $NH_4OH$ was dripped into each mixed solution under the same conditions as in Example 1 to obtain a precipitate. Combustible gas detecting elements were made therefrom by the same method as in Example 1. The gas response characteristics were measured using the element at 400°C; Table 5 shows the relationship between the compositions of metal of each detecting element, the resistance in clear air, and $(R_o—R_G)/R_o$ to each gas of 0.5 volume %.

It is evident from Table 5 that the sensitivity to each gas $(R_o—R_G)/R_o$ increases in the same way as in Example 2, if Sn, In, Cu or Zn is added to the amorphous semiconductor composed of the system of Fe-O-$(SO_4,OH,F)$. The sensitivity to each combustible gas of the detecting element was stable even after prolonged operation in an atmosphere of high temperature and high humidity.

X-ray diffraction showed that no crystalline substance was present in the elements and chemical analysis and infra-red spectral analysis showed the presence of sulphate radical, hydroxyl group and fluorine. Thus the elements are thought to be composed mainly of amorphous semiconductor.

### Comparison Example 3 (production of crystalline detecting elements)

Each of commercially available ferric oxide $(\alpha\text{-}Fe_2O_3)$, cupric oxide (CuO), zinc oxide (ZnO), stannic oxide $(SnO_2)$ and indium oxide $(In_2O_3)$ was weighed and mixed to make 22 combinations of metal elements as shown in Table 6. Each mixture was mixed for 2 hours and crushed and then the obtained particles were formed into granules of size 100 to 200 micrometres, using an organic binder. Combustible gas detecting elements were made from these granules by the same method as in Example 1, and the gas response characteristics of each detecting element were examined. The results are shown in Table 6.

It is evident in comparison with the results shown in Table 5 that the sensitivities are lower in all cases, and the sensitivity to methane is the lowest. X-ray diffraction of each sintered detecting element showed the presence of $\alpha$-

Fe₂O₃ and CuO, ZnO, SnO₂ or In₂O₃; and a little spinel phase. Chemical analysis and infra-red spectral analysis showed the absence of hydroxyl groups, sulphate radicals and chlorine.

TABLE 4

| | | | | | R$_o$ | $(R_o - R_G)/R_o$ (%) | | | | |
|---|---|---|---|---|---|---|---|---|---|---|
| Fe | Cu | Zn | Sn | In | (MΩ) | methane | ethyl-alcohol | hydrogen | isobutane | acetone |
| 98.0 | 2.0 | — | — | — | 7.4 | 34.3 | 28.5 | 27.2 | 30.5 | 26.8 |
| 98.0 | — | 2.0 | — | — | 7.3 | 32.1 | 27.2 | 24.7 | 28.8 | 24.1 |
| 98.0 | — | — | 2.0 | — | 7.7 | 29.2 | 30.9 | 29.9 | 27.9 | 28.7 |
| 98.0 | — | — | — | 2.0 | 7.9 | 36.5 | 27.0 | 31.2 | 32.3 | 32.5 |
| 98.0 | 1.0 | 1.0 | — | — | 7.3 | 27.2 | 29.2 | 25.5 | 28.2 | 31.7 |
| 98.0 | — | 1.0 | 1.0 | — | 7.9 | 28.5 | 30.4 | 24.2 | 27.9 | 31.2 |
| 98.0 | — | — | 1.0 | 1.0 | 8.5 | 27.4 | 28.0 | 26.5 | 29.1 | 34.7 |
| 98.0 | 1.0 | — | 1.0 | — | 8.8 | 31.1 | 30.1 | 26.2 | 28.2 | 36.3 |
| 70.0 | 10.0 | 10.0 | 10.0 | — | 11.5 | 63.3 | 67.7 | 64.0 | 52.8 | 42.9 |
| 70.0 | — | 10.0 | 10.0 | 10.0 | 13.0 | 78.5 | 68.2 | 85.4 | 86.2 | 87.5 |
| 60.0 | 10.0 | 10.0 | 10.0 | 10.0 | 14.2 | 72.4 | 69.8 | 72.5 | 72.1 | 87.4 |
| 55.0 | — | 45.0 | — | — | 3.8 | 41.7 | 53.0 | 48.1 | 52.3 | 68.2 |
| 55.0 | — | — | 45.0 | — | 13.5 | 69.1 | 73.4 | 67.2 | 88.2 | 72.1 |
| 55.0 | 20.0 | — | — | 25.0 | 19.0 | 35.2 | 43.3 | 41.0 | 58.7 | 61.2 |
| 55.0 | — | 20.0 | — | 25.0 | 4.2 | 37.7 | 39.6 | 38.5 | 41.5 | 33.7 |
| 55.0 | — | — | 20.0 | 25.0 | 15.4 | 42.9 | 45.2 | 47.0 | 49.8 | 38.0 |
| 55.0 | 45.0 | — | — | — | 21.3 | 38.6 | 45.3 | 42.2 | 47.8 | 54.3 |
| 55.0 | — | — | — | 45.0 | 22.3 | 25.3 | 33.3 | 35.5 | 41.2 | 43.1 |
| 45.0 | 55.0 | — | — | — | 27.3 | 12.1 | 35.1 | 26.8 | 33.0 | 48.2 |
| 45.0 | — | 30.0 | 25.0 | — | 4.1 | 18.0 | 48.3 | 42.9 | 43.3 | 25.4 |
| 45.0 | — | 55.0 | — | — | 1.8 | 6.9 | 33.8 | 33.4 | 42.3 | 32.8 |
| 45.0 | — | — | 55.0 | — | 28.8 | 9.1 | 86.0 | 65.1 | 78.9 | 53.8 |

TABLE 5

| Mixing ratio of metal element (atom %) | | | | | $R_o$ | $(R_o - R_G)/R_o$ (%) | | | | |
|------|------|------|------|------|------|---------|---------------|----------|-----------|---------|
| Fe | Cu | Zn | Sn | In | (MΩ) | methane | ethyl-alcohol | hydrogen | isobutane | acetone |
| 98.0 | 2.0 | — | — | — | 5.4 | 31.3 | 29.4 | 28.7 | 32.5 | 27.0 |
| 98.0 | — | 2.0 | — | — | 5.0 | 29.5 | 28.1 | 25.2 | 30.1 | 25.2 |
| 98.0 | — | — | 2.0 | — | 5.7 | 28.8 | 32.3 | 31.5 | 29.2 | 30.1 |
| 98.0 | — | — | — | 2.0 | 5.9 | 30.2 | 28.3 | 29.2 | 33.2 | 34.2 |
| 98.0 | 1.0 | 1.0 | — | — | 4.9 | 25.3 | 30.2 | 28.3 | 29.5 | 32.4 |
| 98.0 | — | 1.0 | 1.0 | — | 5.2 | 24.8 | 31.5 | 25.4 | 29.5 | 33.1 |
| 98.0 | — | — | 1.0 | 1.0 | 6.3 | 26.5 | 29.8 | 27.3 | 29.4 | 33.5 |
| 98.0 | 1.0 | — | 1.0 | — | 6.4 | 28.0 | 27.5 | 26.2 | 28.2 | 34.0 |
| 70.0 | 10.0 | 10.0 | 10.0 | — | 8.4 | 57.5 | 68.5 | 65.0 | 51.5 | 43.2 |
| 70.0 | — | 10.0 | 10.0 | 10.0 | 9.7 | 60.5 | 68.9 | 85.3 | 85.2 | 87.5 |
| 60.0 | 10.0 | 10.0 | 10.0 | 10.0 | 10.2 | 66.2 | 70.5 | 75.0 | 73.3 | 86.5 |
| 55.0 | — | 45.0 | — | — | 2.7 | 40.5 | 52.1 | 42.3 | 48.1 | 64.3 |
| 55.0 | — | — | 45.0 | — | 10.5 | 67.5 | 74.2 | 67.3 | 85.2 | 69.4 |
| 55.0 | 20.0 | — | — | 25.0 | 15.3 | 33.1 | 43.9 | 44.0 | 58.8 | 61.1 |
| 55.0 | — | 20.0 | — | 25.0 | 3.0 | 32.4 | 40.8 | 37.4 | 40.3 | 34.5 |
| 55.0 | — | — | 20.0 | 25.0 | 12.4 | 37.5 | 47.2 | 47.1 | 52.0 | 37.5 |
| 55.0 | 45.0 | — | — | — | 15.4 | 38.4 | 45.3 | 42.8 | 49.6 | 51.2 |
| 55.0 | — | — | — | 45.0 | 15.9 | 35.2 | 34.2 | 38.4 | 40.5 | 42.0 |
| 45.0 | 55.0 | — | — | — | 19.8 | 25.3 | 33.1 | 27.1 | 35.1 | 45.0 |
| 45.0 | — | 30.0 | 25.0 | — | 3.2 | 11.3 | 47.5 | 43.8 | 41.1 | 25.4 |
| 45.0 | — | 55.0 | — | — | 1.1 | 5.4 | 31.5 | 29.2 | 43.0 | 33.4 |
| 45.0 | — | — | 55.0 | — | 20.2 | 8.7 | 85.3 | 65.2 | 75.4 | 52.8 |

TABLE 6

| Mixing ratio of metal element (atom %) | | | | | $R_o$ | $(R_o - R_G)/R_o$ (%) | | | | |
|------|------|------|------|------|------|---------|---------------|----------|-----------|---------|
| Fe | Cu | Zn | Sn | In | (MΩ) | methane | ethyl-alcohol | hydrogen | isobutane | acetone |
| 98.0 | 2.0 | — | — | — | 2.6 | 1.1 | 1.2 | 1.8 | 1.9 | 1.6 |
| 98.0 | — | 2.0 | — | — | 2.1 | 1.2 | 1.2 | 2.1 | 2.4 | 1.9 |
| 98.0 | — | — | 2.0 | — | 2.7 | 1.4 | 1.5 | 4.8 | 5.0 | 3.2 |
| 98.0 | — | — | — | 2.0 | 2.8 | .1.2 | 1.3 | 2.4 | 3.1 | 2.1 |
| 98.0 | 1.0 | 1.0 | — | — | 2.2 | 1.2 | 1.3 | 3.0 | 3.6 | 2.1 |
| 98.0 | — | 1.0 | 1.0 | — | 2.6 | 1.5 | 1.5 | 5.6 | 6.1 | 3.6 |
| 98.0 | — | — | 1.0 | 1.0 | 3.0 | 1.4 | 1.6 | 5.3 | 6.0 | 2.1 |
| 98.0 | 1.0 | — | 1.0 | — | 2.8 | 1.2 | 1.3 | 4.0 | 5.4 | 1.4 |
| 70.0 | 10.0 | 10.0 | 10.0 | — | 1.7 | 2.5 | 4.7 | 11.1 | 16.5 | 6.1 |
| 70.0 | — | 10.0 | 10.0 | 10.0 | 1.4 | 2.5 | 4.6 | 12.1 | 14.9 | 6.4 |
| 60.0 | 10.0 | 10.0 | 10.0 | 10.0 | 2.7 | 2.5 | 6.8 | 20.5 | 27.7 | 9.9 |
| 55.0 | — | 45.0 | — | — | 0.7 | 3.4 | 4.8 | 8.8 | 10.0 | 4.9 |
| 55.0 | — | — | 45.0 | — | 1.6 | 4.8 | 13.6 | 21.4 | 29.5 | 13.7 |
| 55.0 | 20.0 | — | — | 25.0 | 4.7 | 1.2 | 1.2 | 7.2 | 8.4 | 2.6 |
| 55.0 | — | 20.0 | — | 25.0 | 1.9 | 1.7 | 1.9 | 9.8 | 13.5 | 2.5 |
| 55.0 | — | — | 20.0 | 25.0 | 3.6 | 3.8 | 3.3 | 12.3 | 19.8 | 6.7 |
| 55.0 | 45.0 | — | — | — | 5.4 | 1.2 | 1.3 | 2.3 | 3.3 | 2.1 |
| 55.0 | — | — | — | 45.0 | 4.8 | 1.3 | 1.5 | 7.7 | 8.8 | 1.8 |
| 45.0 | 55.0 | — | — | — | 8.6 | 1.3 | 1.5 | 6.2 | 7.9 | 2.9 |
| 45.0 | — | 30.0 | 25.0 | — | 2.1 | 3.9 | 15.9 | 20.0 | 30.1 | 17.7 |
| 45.0 | — | 55.0 | — | — | 0.8 | 2.2 | 3.1 | 10.1 | 17.1 | 4.5 |
| 45.0 | — | — | 55.0 | — | 7.4 | 5.1 | 17.6 | 29.8 | 32.5 | 17.6 |

The above Examples and Comparison Examples show that the sensitivity to methane is low for a crystalline detecting element, but that their sensitivity to other combustible gases is large; such elements are highly stable in an atmosphere of high temperature and high humidity.

The reduced gas-selectivity of an amorphous metal oxide semiconductor according to the invention may be because an amorphous material may contain donor and acceptor levels which are not at constant positions but are widely distributed, and/or because it does not have a fixed lattice constant, so that it has active sites for the adsorption of a variety of gases.

In general, if an amorphous substance is kept at high temperature, separation of the crystalline phase will occur, but the temperature necessary to activate detecting elements according to the invention is low enough as compared with the temperature necessary for the crystallization, so that substantial crystallization does not occur in use. The presence of anionic radicals, such as sulphate, in amorphous semiconductor may act against crystallization, to contribute to the stabilization of the detecting element.

In the Examples, the detecting elements were sintered moulded bodies, but the elements may also be in the form of sintered films (made by coating a paste on a substrate, and then calcining and sintering).

## Claims

1. A combustible gas detector, which comprises a combustible gas detecting element in the form of a sintered film or body arranged between counterelectrodes, the detecting element comprising an amorphous metal oxide semiconductor containing anionic radicals, characterised in that the anionic radicals comprise
(i) halide ions, and
(ii) sulphate ions and/or hydroxyl ions.

2. A combustible gas detector according to claim 1, in which the halide ions are chloride and/or fluoride.

3. A combustible gas detector according to claim 1 or 2, in which the metal in the metal oxide is wholly or predominently iron.

4. A combustible gas detector according to claim 1 or 2, in which the metal in the metal oxide comprises at least 50 atom% of iron and up to 50 atom% of at least one of copper, zinc, tin and indium.

## Revendications

1. Détecteur de gaz combustible, qui comprend un élément de détection de gaz combustible sous forme d'un film ou d'un corps fritté disposé entre des électrodes auxiliaires, l'élément de détection comprenant un semiconducteur amorphe à base d'oxyde métallique contenant des radicaux anioniques, caractérisé en ce que les radicaux anioniques comprennent:
(i) des ions halogénures, et
(ii) des ions sulfates et/ou des ions hydroxyles.

2. Détecteur de gaz combustible selon la revendication 1, dans lequel les ions halogénures sont des ions chlorures et/ou fluorures.

3. Détecteur de gaz combustible selon l'un des revendications 1 et 2, dans lequel le métal de l'oxyde métallique est et totalité ou essentiellement du fer.

4. Détecteur de gaz combustible selon l'une des revendications 1 et 2, dans lequel le métal de l'oxyde métallique est du fer pour 50 atomes% au moins et pour 50 atomes% au plus d'au moins un métal du groupe comprenant le cuivre, le zinc, l'étain et l'indium.

## Patentansprüche

1. Detektor für brennbares Gas, umfassend ein zwischen Gegenelektroden angeordnetes Detektorelement für brennbares Gas in Form eines gesinterten Films oder Körpers, wobei das Detektorelement einen Halbleiter aus amorphem Metalloxid, enthaltend anionische Radikale, umfaßt, dadurch gekennzeichnet, daß die anionischen Radikale sich aus
(i) Halogenidonen und
(ii) Sulfationen und/oder Hydroxylionen zusammensetzen bzw. daraus bestehen.

2. Detektor für brennbares Gas nach Anspruch 1, dadurch gekennzeichnet, daß die Halogenidionen Chlorid- und/oder Fluoridionen sind.

3. Detektor für brennbares Gas nach Anspruch 1 oder 2, dadurch gekennzeichnet, daß das Metall in dem Metalloxid vollständig oder überwiegend Eisen ist.

4. Detektor für brennbares Gas nach Anspruch 1 oder 2, dadurch gekennzeichnet, daß das Metall in dem Metalloxid mindestens 50 Atom-% Eisen und bis zu 50 Atom-% mindestens eines der Metalle Kupfer, Zink, Zinn und Indium umfaßt.